# EUROPÄISCHE PATENTSCHRIFT

(11) **EP 3 502 971 B1**
(45) Veröffentlichungstag und Bekanntmachung des Hinweises auf die Patenterteilung: **18.11.2020**
(21) Anmeldenummer: 18214309.9
(22) Anmeldetag: 20.12.2018
(51) Int. Cl.: G06K 19/073

(54) **PROZESSORCHIPKARTE UND EIN VERFAHREN ZU DEREN BETRIEB**
PROCESSOR CHIP CARD AND METHOD FOR ITS OPERATION
CARTE À PUCE DE PROCESSEUR ET SON PROCÉDÉ DE FONCTIONNEMENT

(30) Priorität: 21.12.2017 DE 102017223509
(43) Veröffentlichungstag der Anmeldung: 26.06.2019
(73) Patentinhaber: Bundesdruckerei GmbH, 10969 Berlin (DE)
(72) Erfinder: Kraus, Micha, 10827 Berlin (DE); Bastian, Paul, 10243 Berlin (DE)
(74) Vertreter: Glawe, Delfs, Moll

(56) Entgegenhaltungen:
- EP-A1- 3 009 966
- EP-A2- 3 214 583
- DE-U1-202010 006 698
- US-A1- 2015 262 052
- US-B1- 9 230 255

## Beschreibung

### Technisches Gebiet

Die vorliegende Erfindung betrifft eine Prozessorchipkarte und ein Verfahren zu deren Betrieb.

### Beschreibung des Standes der Technik

Aus dem Stand der Technik wie bspw. der DE 196 10 070 A1 sind Chipkarten (auch Smartcard genannt) für unterschiedliche Anwendungen wie Ausweisfunktion, Zutritt- bzw. Zugriffskontrolle, Zahlungsverkehr, Signaturfunktion, u.dgl. bekannt. Es finden sowohl kontaktbehaftete wie kontaktlose Chipkarten Verwendung. Eine neuere Entwicklung sieht vor, im Rahmen von multifunktionalen Chipkarten unterschiedliche Anwendungen auf eine Karte zu konzentrieren, so dass mit einer einzigen Karte logischer und/oder physischer Zutritt sowie Entschlüsselung und Signieren elektronischer Post oder elektronischer Dokumente, Zahlungsfunktion usw. realisiert werden können (z.B. "GoID"-Karte oder "neuer Betriebsausweis" (nBA), beispielsweise wie in DE 10 2016 203 610 A1 beschrieben). Hierbei wird aus Gründen einer einfachen Verwendbarkeit der Karte eine Authentisierung des Nutzers (bspw. mittels PIN und/oder Fingerabdruck) für mehrere unterschiedliche Anwendungen verwendet, mit der Folge, dass mit einer Eingabe (ein- und derselben PIN oder eines Fingerabdrucks) sowohl ein physischer/logischer Zutritt als auch eine Verschlüsselung/Signatur durchgeführt werden können.

Zudem ist es bekannt, Chipkarten mit optischen Mitteln zur Visualisierung einer Statuskontrolle bspw. in Form eines in die Oberfläche der Chipkarte aufgebrachten Leuchtmittels (DE 20 2010 006 698 U1) oder mit einem optischen/akustischen Fehlbedienungszähler (DE 198 39 041 C2) zu versehen. Aus der US 9,230,255 B1, der US 2015/262052 A1 und der EP 3 009 966 A1 sind Prozessorchipkarten gemäß dem Oberbegriff des Anspruchs 1 bekannt.

### Zusammenfassung der Erfindung

Ausgehend hiervon werden erfindungsgemäß eine Prozessorchipkarte mit den Merkmalen des Anspruchs 1 und ein Verfahren zum Betrieb einer Prozessorchipkarte mit den Merkmalen des Anspruchs 3 bzw. 11 vorgeschlagen.

Die Erkenntnis der Erfindung liegt darin begründet, einem Nutzer einer Chipkarte während bzw. vor seiner Authentisierung eine Rückmeldung darüber zu geben, für welche der möglichen Anwendungen die Authentisierung benutzt werden soll/wird. Der Nutzer kann somit bei der Eingabe seiner Kennung der zugeordneten Terminal-/Hostsoftware vertrauen, eine Missbrauchgefahr wird zumindest minimiert (anders als im Stand der Technik, wo dem Nutzer nicht auffallen würde, wenn zum Beispiel beim Auflegen des Fingers an einer Pforte (zur Erzielung eines physischen Zutritts) im Hintergrund womöglich eine Authentisierung zum Signieren einer E-Mail benutzt wird).

Zu diesem Zweck ist die Chipkarte mit einer (optischen und/oder akustischen) Signalanzeige versehen, anhand derer der Nutzer eine erfindungsgemäße Rückmeldung über die "Verwendung" seiner Authentisierung erhält. Der Berechtigungsverwalter kann auf dem mindestens einen Mikrocontroller der Prozessorchipkarte ausgebildet sein. Bspw. umfasst die Prozessorchipkarte als ersten Mikrocontroller einen sicheren Mikrocontroller (Secure Microcontroller) und als zweiten Mikrocontroller einen Zwischenchip oder sogenannten Proxy. Der Zwischenchip steht in Datenverbindung mit dem sicheren Mikrocontroller und ist für die Kommunikation zwischen einer Außenankopplung, bspw. ein auf der Prozessorchipkarte vorgesehenes Koppelelement, das über eine kontaktlose Schnittstelle mit einem externen Lesegerät oder Terminal (PCD; proximity coupling device) kommuniziert, und den einzelnen Elementen auf der Prozessorchipkarte wie Eingabeelement, Signalanzeige, eventuell weiteres Ausgabeelement, den Anwendungen und dem Berechtigungsverwalter zuständig. Der Berechtigungsverwalter kann in dieser Konfiguration bspw. auf dem sicheren Mikrocontroller ausgebildet sein. Der Berechtigungsverwalter kann zusätzlich direkt mit den Anwendungen in einer Kommunikationsverbindung stehen, um insbesondere Informationen zum Authentisierungsstatus auszutauschen.

Die Authentisierung in Reaktion auf die Signalanzeige kann auf der Grundlage einer an und für sich bekannten Eingabe einer Kennung durch den Nutzer erfolgen. Bei dieser Kennung handelt es sich bspw. um eine Nutzerkennung wie eine PIN und/oder eine biometrische Kennung wie einen Fingerabdruck.

Die Kennung wird im Berechtigungsverwalter geprüft und bei positiver Prüfung wird der Authentisierungsstatus der Kennung auf "True" gesetzt. Der Berechtigungsverwalter veranlasst daraufhin die Ausführung der gewünschten Anwendung bspw. über den Zwischenchip, der eine entsprechende Anweisung (Ausführungsbefehl) an die gewünschte Anwendung sendet.

Um sicherzustellen, dass keine ungewünschte Anwendung ausgeführt wird, ist erfindungsgemäß vorgesehen, dass nach Freigabe der zur Ausführung vorgesehenen Anwendung die mindestens eine verbleibende nicht ausgewählte Anwendung nicht ausgeführt werden kann. Die erfindungsgemäße Konfiguration bedeutet, dass eine Ausführung einer vom Nutzer nicht gewünschten bzw. nicht ausgewählten Anwendung verhindert wird, oder mit anderen Worten: bei Anfrage nach einer nicht ausgewählten Anwendung wird deren Ausführung (vom Berechtigungsverwalter) verweigert. Hierzu kann vorgesehen sein, dass vor Ausführung der Anwendung diese direkt bei dem Berechtigungsverwalter den Authentisierungsstatus abfragt. Nach erfolgter Ausführung der Anwendung und Übersenden des Ergebnisses von der Anwendung an den Zwischenchip erfolgt eine De-Authentisierung der Kennung zwischen dem Berechtigungsverwalter und dem Zwischenchip, so dass der Authentisierungsstatus auf "False" oder "nicht authentisiert" gesetzt wird, wodurch eine eventuelle weitere Nutzung der Authentisierung für eine andere, nicht gewünschte Anwendung unterbunden wird.

Des weiteren können jeder der auf der Chipkarte vorhandenen Anwendungen anwendungsspezifische Pseudo-Authentisierungsobjekte zugeordnet sein, die jeweils nur für die zugeordnete bestimmte Anwendung gelten, aber die gleiche Referenz (bspw. die Nutzerkennung) besitzen. Für den Nutzer ändert sich hierbei nichts, für ihn bleibt es bei der wie voranstehend beschriebenen üblichen Eingabe seiner Kennung. Der Berechtigungsverwalter ist in dieser Ausführungsvariante so konfiguriert, dass er bei Eingabe einer Kennung in Reaktion auf eine über die Signalanzeige wiedergegebene Anwendung intern mit der dieser Anwendung zugeordneten Pseudo-Kennung arbeitet und diese nach Eingabe der Kennung durch den Nutzer und positiver Kennungsprüfung (also erfolgter Authentisierung) auf "True" setzt. Erhält die gewünschte Anwendung einen Ausführungsbefehl, so prüft sie mit dem Berechtigungsverwalter den Status der ihr zugeordneten Pseudo-Kennung. Ist dieser "True", so kann die Anwendung ausgeführt werden. Alle anderen Pseudo-Kennungen sind nicht aktiviert bzw. "False", so dass die zugeordneten Anwendungen bei Erhalt eines Ausführungsbefehls eine negative Rückmeldung vom Berechtigungsverwalter erhalten und als Folge eine Ausführung verweigern (Sicherheitsstatus nicht zufriedenstellend). Eine De-Authentisierung ist nicht zwingend notwendig.

Die vorliegende Beschreibung deckt auch ein Computerprogramm mit Programmcode ab, der dazu geeignet ist, ein erfindungsgemäßes Verfahren auszuführen, wenn das Computerprogramm auf einer Prozessorchipkarte abläuft. Es werden sowohl das Computerprogramm selbst als auch abgespeichert auf einem computerlesbaren Medium (Computerprogrammprodukt) beansprucht.

Weitere Vorteile und Ausgestaltungen der Erfindung ergeben sich aus den Unteransprüchen, der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnungen ausführlich beschrieben.

### Kurzbeschreibung der Zeichnung

Figur 1 zeigt in stark schematisierter Blockdarstellung eine erfindungsgemäße Prozessorchipkarte.

Figur 2 zeigt einen schematischen Prozessablauf eines erfindungsgemäßen Verfahrens gemäß einer ersten Ausführungsvariante.

Figur 3 zeigt einen schematischen Prozessablauf eines erfindungsgemäßen Verfahrens gemäß einer zweiten Ausführungsvariante mit anwendungsspezifischen Pseudo-Authentisierungsobjekten.

### Ausführliche Beschreibung

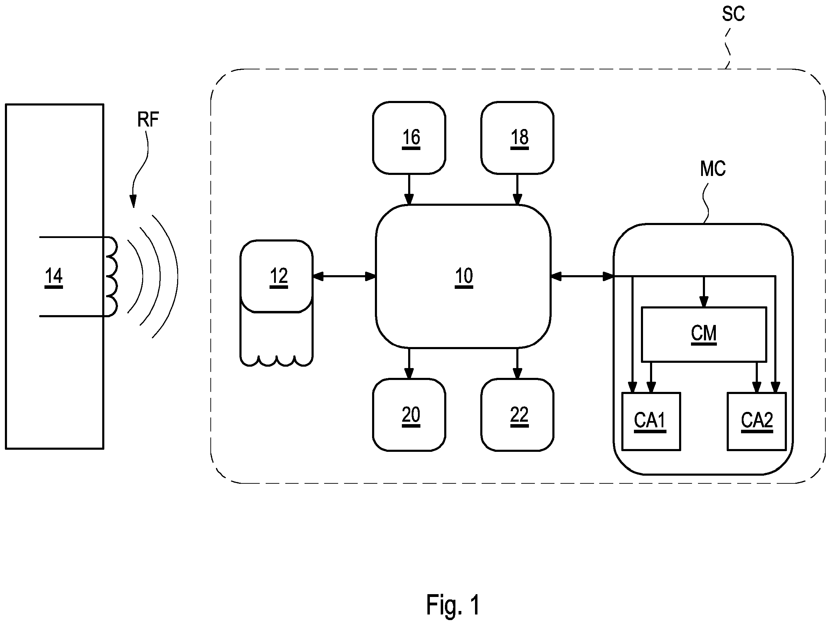

Figur 1 zeigt in stark schematisierter Blockdarstellung eine erfindungsgemäße Prozessorchipkarte oder Smartcard SC, im folgenden kurz als "Chipkarte" bezeichnet. Die Chipkarte SC ist als physikalische Einheit mit zwei in an sich bekannter Art und Weise integrierten Prozessoren oder Mikrokontrollern ausgebildet und umfasst einen (bspw. für kryptographische Anwendungen üblichen) sicheren Mikrocontroller MC und zusätzlich einen weiteren Mikrocontroller oder Zwischenchip 10, auch Proxy genannt.

Die beiden Mikrocontroller MC und 10 sind mittels einer nicht näher bezeichneten Datenleitung verbunden, die auf eine sichere Datenverbindung, insbesondere im Sinne der ISO-Norm 7816, Stand 1. November 2016, ausgelegt sein kann.

Die Chipkarte SC umfasst des weiteren ein Koppelelement 12 zur kontaktlosen Datenübertragung mit einem externen Terminal oder Lesegerät 14 (PCD: Proximity Coupling Device), bspw. für eine Funkverbindung gemäß der ISO-Norm 14443 vom März 2016. Das Koppelelement 12 ist in dem dargestellten Ausführungsbeispiel mit dem Zwischenchip oder Proxy 10 verbunden.

Die erfindungsgemäße Chipkarte SC kann des weiteren ein oder mehrere Eingabeelemente umfassen. In dem dargestellten Ausführungsbeispiel sind dies ein als Fingerabdrucksensor ausgebildetes erstes Eingabeelement 16 und ein als sogenanntes "PIN-Pad" ausgebildetes zweites Eingabeelement 18. Das bzw. die Eingabeelemente können - wie dargestellt - mit dem Zwischenchip oder Proxy 10 verbunden sein.

Erfindungsgemäß umfasst die Chipkarte SC wenigstens zwei Anwendungen CA1 und CA2. Unter einer "Anwendung" ist im Kontext dieser Erfindung ein Programm für eine konkrete Nutzungsanwendung der Chipkarte zu verstehen. Es handelt sich hierbei um Daten, Kommandos, Abläufe, Mechanismen, Algorithmen und Programmcode in der Chipkarte, um diese im Rahmen eines bestimmten Systems zu betreiben. Bei derartigen Anwendungen kann es sich, wie eingangs bereits erwähnt, um das Bereitstellen eines logischen und/oder physischen Zutritts, die Entschlüsselung und/oder das Signieren elektronischer Post bzw. elektronischer Dokumente, eine Bezahlfunktion u.a.m. handeln. Anwendungen werden geläufigerweise auch als "Applets" bezeichnet.

Selbstverständlich kann eine Chipkarte mehr als die beispielhaft beschriebenen zwei Anwendungen umfassen. Die erwähnte "GoID"-Karte bspw. umfasst im wesentlichen vier unterschiedliche Anwendungen, nämlich die Gewährung eines logischen Zutritts (bspw. bei einer Anmeldung zu einem Computerprogramm), die Gewährung eines physischen Zutritts (bspw. in ein Firmengelände oder ein Labor), zum Signieren von E-Mails und zum verschlüsseln/Entschlüsseln von E-Mails. Bei zunehmender Verbreitung von sogenannten multifunktionalen Chipkarten ist auch eine zunehmende Anzahl von Anwendungen auf einer Karte zu erwarten. Des weiteren können selbstverständlich auch zwei oder mehr verschiedene Anwendungen in einem Programm realisiert sein. Im Sinne der vorliegenden Erfindung stellt somit auch eine Nutzungsmöglichkeit eines Programms eine Anwendung dar, mit der Folge, dass zwei oder mehr Nutzungsmöglichkeiten eines Programms als die mindestens zwei Anwendungen der Erfindung zu verstehen sind.

Des weiteren umfasst die Chipkarte SC erfindungsgemäß eine Signalanzeige 20. Dabei kann es sich um ein akustisches und/oder optisches Anzeigeelement wie bspw. eine LED o.dgl. handeln. In dem dargestellten Ausführungsbeispiel umfasst die Chipkarte SC noch ein zusätzliches Ausgabeelement 22 wie bspw. eine Anzeigeeinheit. Die Signalanzeige 20 und das Ausgabeelement 22 sind in dem dargestellten Ausführungsbeispiel mit dem Zwischenchip oder Proxy 10 verbunden. In anderer Ausgestaltung der Erfindung kann die Chipkarte mehrere Signalanzeigen umfassen, bspw. eine Signalanzeige pro Anwendung, so dass jeder Anwendung eine eigene Signalanzeige, wie bspw. eine jeweils anders farbige LED, zugeordnet ist. In dem nachstehend beschriebenen Ausführungsbeispiel ist die Signalanzeige 20 so ausgestaltet, dass sie zwei unterschiedliche Signale entsprechend den beiden Anwendungen CA1 bzw. CA2 ausgeben kann.

Die Chipkarte SC umfasst außerdem einen erfindungsgemäßen Berechtigungsverwalter CM (CM: Credential Manager), der in dem dargestellten Ausführungsbeispiel auf dem sicheren Mikrocontroller MC ausgebildet ist. Andere Ausgestaltungen sind möglich und erschließen sich dem Fachmann ohne weiteres.

Der Berechtigungsverwalter CM ist mit den beiden Anwendungen CA1, CA2 verbunden. Die beiden Anwendungen CA1, CA2 sind in dem dargestellten Ausführungsbeispiel auf dem sicheren Mikrocontroller MC ausgebildet. Der Proxy 10 ist mit den Anwendungen CA1, CA2 zumindest indirekt verbunden. Andere Ausgestaltungen sind möglich und erschließen sich dem Fachmann ohne weiteres.

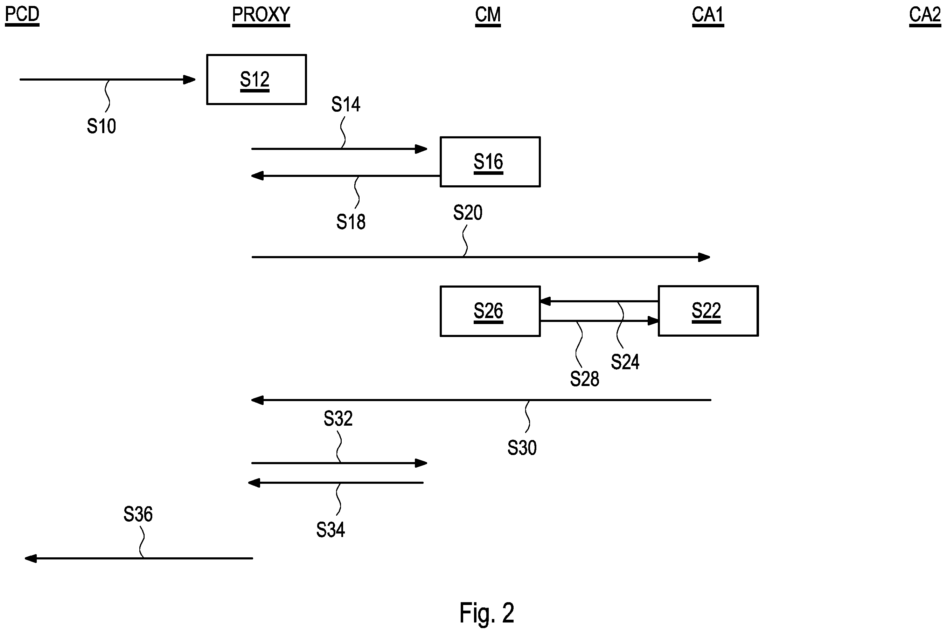

Im Betrieb der erfindungsgemäßen Prozessorchipkarte SC wie in Figur 2 schematisch dargestellt erhält der Proxy 10 über die kontaktlose Schnittstelle RF/12 von dem Lesegerät 14/PCD bei S10 eine Anfrage, eine Sicherheitsoperation gemäß der ersten Anwendung CA1 (client applet 1) auszuführen. Daraufhin veranlasst der Proxy 10 bei S12, dass über die Signalanzeige 20 das der angefragten ersten Anwendung CA1 zugeordnete Signal angezeigt wird.

Der Proxy 10 wartet dann auf eine Bestätigung durch den Nutzer, dass er eine Ausführung der über die Signalanzeige 20 angezeigten Anwendung CA1 wünscht. Dies kann bspw. durch Eingabe einer Kennung (bspw. auf der Karte), wie einer PIN o.dgl., erfolgen, auf deren Grundlage auch eine Authentisierung des Nutzers vorgenommen werden kann, oder alternativ durch eine separate direkte Bestätigung.

In dem dargestellten Ausführungsbeispiel leitet der Proxy 10 bei S14 die empfangene PIN zur Überprüfung an den Berechtigungsverwalter CM weiter. Bei S16 prüft der Berechtigungsverwalter CM die PIN und gibt bei S18 eine positive Rückmeldung an den Proxy 10. Damit ist der Authentisierungsstatus der PIN kartenintern auf "TRUE" gesetzt. Erfindungsgemäß wird somit in einem Gang die angezeigte Anwendung die Nutzer-Authentisierung initiiert.

Als Folge sendet der Proxy 10 bei S20 einen Ausführungsbefehl an die erste Anwendung CA1. Die Anwendung CA1 erzeugt in Reaktion auf diesen Ausführungsbefehl bei S22 eine Anfrage zum Authentisierungsstatus der PIN und sendet diese Anfrage bei S24 an den Berechtigungsverwalter CM. Der Berechtigungsverwalter CM fragt bei S26 den Authentisierungsstatus der PIN ab und sendet bei S28 das Ergebnis der Abfrage/Überprüfung (Okay/TRUE) an die Anwendung CA1, die damit (zumindest implizit) freigegeben ist und daraufhin die Ausführung startet.

Nach erfolgter Ausführung der Anwendung CA1 wird bei S30 das Ausführungsergebnis von der Anwendung CA1 an den Proxy 10 übermittelt. In Reaktion auf das erhaltene Ergebnis übermittelt der Proxy 10 bei S32 einen De-Authentisierungsbefehl an den Berechtigungsverwalter CM, der daraufhin den Authentisierungsstatus der PIN auf "nicht gesetzt" bzw. "FALSE" setzt und bei S34 das entsprechende Okay als Bestätigung an den Proxy 10 sendet, was wiederum den Proxy 10 dazu veranlasst, das Ergebnis der Anwendungsausführung bei S36 an das Lesegerät/Terminal PCD zu senden (wenn es sich bspw. um die Einräumung eines physischen Zutritts durch ein Gatter oder eine Tür handelt, bestünde das Ergebnis der Anwendung CA1 in der Feststellung, dass der authentisierte Nutzer zugangsberechtigt ist und das Gatter bezieht wie die Türe zu öffnen ist, und das Terminal erhielte von der Chipkarte (d.h. von deren Proxy) einen Türöffnungsbefehl).

Zusammengefasst stellen sich die Ablaufschritte wie folgt dar:

| | |
|---|---|
| S10 | Anfrage von PCD an Proxy, CA1 auszuführen |
| S12 | Anzeige CA1 auf Signalanzeige, warten auf PIN |
| S14 | Befehl an CM, prüfe PIN |
| S16 | PIN-Prüfung |
| S18 | PIN OK, Authentisierung erfolgt, Status "TRUE" |
| S20 | Ausführungsbefehl von Proxy an CA1 |
| S22 | Anfrage Authentisierungsstatus durch CA1 |
| S24 | Senden Anfrage an CM |
| S26 | Abfrage Authentisierungsstatus in CM |
| S28 | Senden Authentisierungsstatus an CA1 |
| S30 | Ergebnis CA1 an Proxy |
| S32 | Befehl De-Authentisierung der PIN an CM |
| S34 | De-Authentisierung Okay |
| S36 | Ausgabe Ergebnis an PCD |

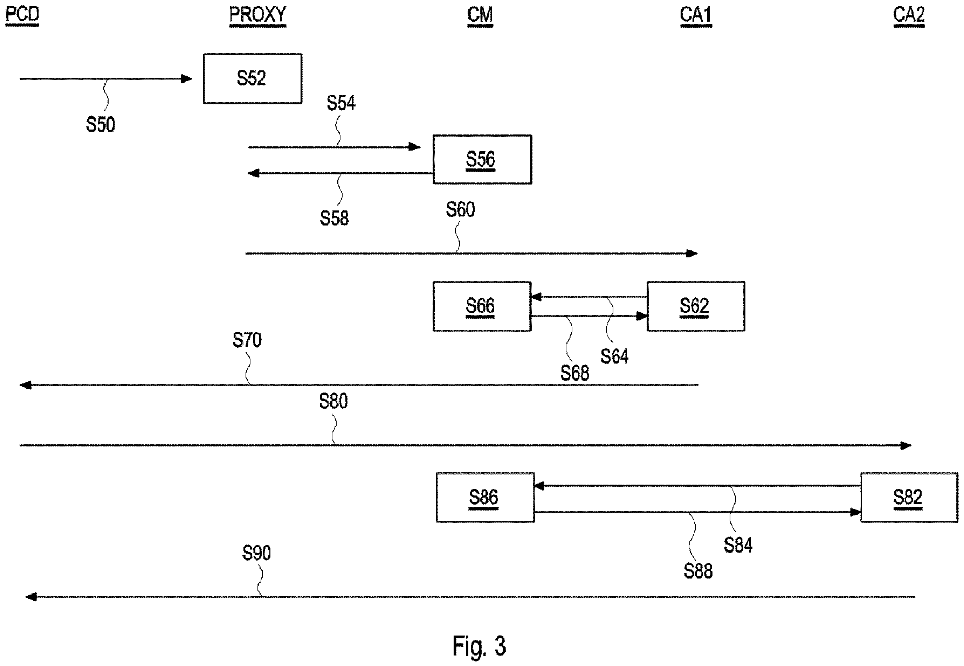

Figur 3 veranschaulicht in schematischer Weise einen entsprechenden Ablauf für eine Ausführungsvariante, bei der so genannte anwendungsspezifische Pseudo-Authentisierungsobjekte vorgesehen sind.

In dem dargestellten Ausführungsbeispiel mit zwei unterschiedlichen Anwendungen CA1 und CA2 und einer PIN als Nutzerkennung zur Authentisierung ist kartenintern (bspw. in dem Berechtigungsverwalter CM) jeder der beiden Anwendungen CA1 und CA2 jeweils eine sogenannte Pseudo-PIN pPIN1 bzw. pPIN2 zugeordnet (wie bereits voranstehend beschrieben, ist der Berechtigungsverwalter dann so konfiguriert, dass er bei Eingabe einer Kennung in Reaktion auf eine über die Signalanzeige wiedergegebene Anwendung intern mit der dieser Anwendung zugeordneten Pseudo-Kennung arbeitet und diese nach Eingabe der Kennung durch den Nutzer und positiver Kennungsprüfung (also erfolgter Authentisierung) auf "True" setzt). Der Berechtigungsverwalter CM ist gemäß dieser Ausführungsvariante so konfiguriert, dass ein Authentisierungsstatus nicht im Zusammenhang mit der Nutzer-PIN gesetzt wird, sondern für die internen Pseudo-PINS pPIN1 und pPIN2.

Im Betrieb der erfindungsgemäßen Prozessorchipkarte SC gemäß der Ausführungsvariante der Figur 3 erhält der Proxy 10 über die kontaktlose Schnittstelle RF/12 von dem Lesegerät 14/PCD bei S50 eine Anfrage, eine Sicherheitsoperation gemäß der ersten Anwendung CA1 (client applet 1) auszuführen. Daraufhin veranlasst der Proxy 10 bei S52, dass über die Signalanzeige 20 das der angefragten ersten Anwendung CA1 zugeordnete Signal angezeigt wird.

Der Proxy 10 wartet dann auf eine Bestätigung durch den Nutzer, dass er eine Ausführung der über die Signalanzeige 20 angezeigten Anwendung CA1 wünscht. Dies erfolgt wie bereits im Zusammenhang mit dem Ausführungsbeispiel der Figur 2 geschrieben durch Eingabe einer Kennung (bspw. auf der Karte), wie einer PIN o.dgl., auf deren Grundlage auch eine Authentisierung des Nutzers vorgenommen werden kann.

Nach Empfang der PIN leitet der Proxy 10 bei S54 die empfangene PIN zur Überprüfung an den Berechtigungsverwalter CM für die konkrete Anwendung CA1 weiter, so dass der Berechtigungsverwalter CM bei S56 die eingegebene Nutzer-PIN mit der der angefragten Anwendung CA1 zugeordneten Pseudo-PIN pPIN1 überprüft. Bei positiver Prüfung der Nutzer-PIN (und damit einhergehende Authentisierung) setzt der Berechtigungsverwalter CM den Authentisierungsstatus der Pseudo-PIN pPIN1 auf "TRUE" und sendet bei S58 eine positive Rückmeldung an den Proxy 10.

Als Folge sendet der Proxy 10 bei S60 einen Ausführungsbefehl an die erste Anwendung CA1. Die Anwendung CA1 erzeugt in Reaktion auf diesen Ausführungsbefehl bei S62 eine Anfrage zum Authentisierungsstatus "ihrer" Pseudo-PIN pPIN1 und sendet diese Anfrage bei S64 an den Berechtigungsverwalter CM. Der Berechtigungsverwalter CM fragt bei S66 den Authentisierungsstatus der pPIN1 ab und sendet bei S68 das Ergebnis der Abfrage (Okay/TRUE) an die Anwendung CA1, die damit (zumindest implizit) freigegeben ist und daraufhin die Ausführung startet.

Nach erfolgreicher Ausführung der Anwendung CA1 wird bei S70 das Ausführungsergebnis von der Anwendung CA1 über den Proxy 10 direkt (an das Lesegerät PCD) ausgegeben. Damit weicht der Ablauf von dem voranstehend in Zusammenhang mit dem Ausführungsbeispiel der Figur 2 beschriebenen Ablauf ab: dort wird das Ergebnis zunächst intern an den Proxy 10 übermittelt, der daraufhin die De-Authentisierung der PIN beim Berechtigungsverwalter CM veranlasst. Erst dann wird in dem Ausgangsbeispiel der Figur 2 das Ergebnis "nach außen" gegeben. In dem vorliegenden Ausführungsbeispiel ist jedoch durch die Verwendung der internen Pseudo-Authentisierungsobjekte pPIN1 und pPIN2 sichergestellt, dass nur dasjenige Pseudo-Authentisierungsobjekt einen positiven Authentisierungsstatus hat, das der gewünschten Anwendung zugeordnet ist, während das bzw. die verbleibenden Pseudo-Authentisierungsobjekte nicht gesetzt sind. Auf die "Vorsichtsmaßnahme" der vorausgehenden De-Authentisierung kann somit verzichtet werden, so dass wie beschrieben das Anwendungsergebnis direkt ausgegeben werden kann.

Dies ist in der Figur 3 beispielhaft mit den Schritten S80 bis S90 veranschaulicht: von dem Lesegerät PCD wird bei S80 (missbräuchlich) eine Anfrage zur Durchführung der zweiten Anwendung CA2 direkt an die Anwendung CA2 gesandt. Wie bei jeder Anfrage erzeugt die Anwendung CA2 in Reaktion hierauf eine Anfrage zum Authentisierungsstatus "ihrer" Pseudo-PIN, also der pPIN2, und sendet diese Anfrage bei S84 an den Berechtigungsverwalter CM. Der Berechtigungsverwalter CM fragt bei S86 den Authentisierungsstatus der pPIN2 ab und sendet bei S88 das Ergebnis der Abfrage ("FALSE"/nicht authentisiert) an die Anwendung CA2, die damit nicht freigegeben ist und keine Ausführung startet. Vielmehr sendet die Anwendung CA2 bei S90 eine Nichtausführungsnachricht (wie bspw. Sicherheitsstatus nicht erfüllt/security status not satisfied) an das Lesegerät PCD.

Zusammengefasst stellen sich die Ablaufschritte wie folgt dar:

| | |
|---|---|
| S50 | Anfrage von PCD an Proxy, CA1 auszuführen |
| S52 | Anzeige CA1 auf Signalanzeige, warten auf PIN |
| S54 | Befehl an CM, prüfe PIN für CA1 (mit pPIN1) |
| S56 | Prüfung PIN mit pPIN1 |
| S58 | PIN OK => Pseudo-PIN-Status "TRUE" |
| S60 | Ausführungsbefehl von Proxy an CA1 |
| S62 | Anfrage zum Authentisierungsstatus durch CA1 |
| S64 | Senden Anfrage an CM |
| S66 | Abfrage Authentisierungsstatus in CM |
| S68 | Senden Authentisierungsstatus an CA1 |
| S70 | Ergebnis CA1 an PCD |
| S80 | Ausführungsbefehl von PCD an CA2 |
| S82 | Abfrage Authentisierungsstatus in CM |
| S84 | Senden Anfrage an CM |
| S86 | Abfrage Authentisierungsstatus in CM |
| S88 | Senden Authentisierungsstatus an CA2 |
| S90 | Ausführungsverweigerung an PCD |

Dem Fachmann erschließen sich gegebenenfalls noch weitere Möglichkeiten, wie kartenintern sichergestellt werden kann, dass lediglich die Anwendung zur Ausführung kommt, die bei Eingabe der Nutzer-Kennung über die Signalanzeige angezeigt wird. Bspw. kann dies auch mittels einer APDU-Filterung im Zusammenspiel mit einer Whitelist, die nur bestimmte sichere Anwendungen zulässt, erfolgen (APDU: application protocol data unit; bezeichnet den softwaretechnischen Datencontainer, in dem die Daten einer Anwendung verpackt werden, um sie zwischen dem Lesegerät/Terminal und der Chipkarte auszutauschen). Alternativ kann auch eine Bindung an eine einzelne APDU zur Einmal-Authentisierung erfolgen.

In einer weiteren Ausführung könnte die Eingabe auf der Karte auch nur eine Autorisierung anstatt einer Authentisierung sein. Der Nutzer sieht also, wofür die Karte benutzt werden soll, die Anwendung fordert aber keine explizite Authentisierung, der Nutzer erkennt dann dennoch (bspw. mittels LED), welche Transaktion durchgeführt werden soll, und bestätigt diese mittels einer Art "Confirm"-Taste/Enter-Taste.

Wie eingangs bereits erwähnt, kann gemäß einer weiteren Ausführung eine einzelne Nutzungsmöglichkeit einer Anwendung CAₓ signalisiert werden.

Die Erfindung verhindert somit einen Missbrauch von Anwendungen auf multifunktionalen Chipkarten, indem eine missbräuchliche Ausführung einer vom Nutzer nicht gewünschten Anwendung verhindert wird. Die nicht ausgewählte Anwendung ist somit (temporär) gesperrt. Der Nutzer kann sicher gehen, dass seine getätigten Nutzerauthentisierung im Zusammenhang mit einer bestimmten Anwendung nur für diese genutzt wird und nicht für andere Anwendungen missbraucht wird. Es handelt sich um eine anwendungsgebundene Nutzerauthentisierung mittels Feedback über eine Signalanzeige bei multifunktionalen Chipkarten.

## Patentansprüche

1. Prozessorchipkarte (SC) mit
- mindestens einem Mikrocontroller (MC, 10),
- mindestens zwei Anwendungen (CA1, CA2),
- mindestens einer Signalanzeige (20) und
- einem Berechtigungsverwalter (CM),
wobei die Prozessorchipkarte (SC) dazu konfiguriert ist,
- mittels der mindestens einen Signalanzeige (20) anzuzeigen, welche der mindestens zwei Anwendungen (CA1, CA2) zur Ausführung vorgesehen ist, und
- nach Empfang einer Bestätigung der zur Ausführung vorgesehenen Anwendung (CA1, CA2) die Anwendung (CA1, CA2) zur Ausführung freizugeben,
**dadurch gekennzeichnet, dass** nach Freigabe der zur Ausführung vorgesehenen Anwendung (CA1, CA2) die mindestens eine verbleibende nicht ausgewählte Anwendung nicht ausgeführt werden kann.

2. Prozessorchipkarte (SC) nach Anspruch 1, bei der die Bestätigung ein Einlesen einer Kennung, bspw. einer Nutzerkennung und/oder biometrischen Kennung, umfasst; und/oder
deren Berechtigungsverwalter (CM) auf dem mindestens einen Mikrocontroller (MC, 10) ausgebildet ist; und/oder
die als ersten Mikrocontroller einen sicheren Mikrocontroller (MC) und als zweiten Mikrocontroller einen mit dem sicheren Mikrocontroller (MC) verbundenen Zwischenchip (10) umfasst; und/oder
bei der jeder der mindestens zwei Anwendungen (CA1, CA2) ein anwendungsspezifisches Pseudo-Authentisierungsobjekt zugeordnet ist.

3. Verfahren zum Betrieb einer Prozessorchipkarte (SC), die mindestens zwei Anwendungen (CA1, CA2) aufweist, wobei eine Auswahl einer zur Ausführung vorgesehenen Anwendung (CA1, CA2) der mindestens zwei Anwendungen (CA1, CA2) über eine Signalanzeige (20) der Prozessorchipkarte (SC) angezeigt und nach Empfang einer Bestätigung der zur Ausführung vorgesehenen Anwendung (CA1, CA2) die Anwendung (CA1, CA2) zur Ausführung freigegeben wird, wobei nach Freigabe der zur Ausführung vorgesehenen Anwendung (CA1, CA2) die mindestens eine verbleibende nicht ausgewählte Anwendung nicht ausgeführt werden kann.

4. Verfahren nach Anspruch 3, bei dem die Bestätigung ein Einlesen einer Kennung, bspw. einer Nutzererkennung und/oder biometrischen Kennung, umfasst; und/oder bei dem die Bestätigung eine Authentisierung umfasst.

5. Verfahren nach einem der Ansprüche 3 oder 4, mit den folgenden Schritten:
- Empfangen einer Auswahl einer der mindestens zwei Anwendungen (CA1, CA2),
- Anzeigen der zur Ausführung vorgesehenen Anwendung (CA1, CA2) über die Signalanzeige (20),
- Empfangen einer Bestätigung des Nutzers,
- Freigeben der bestätigten Anwendung zur Ausführung,
- Ausgeben des Ergebnisses der ausgeführten Anwendung.

6. Verfahren nach einem der Ansprüche 3 bis 5, das vor der Freigabe der bestätigten Anwendung zur Ausführung den Schritt des Überprüfens der Bestätigung umfasst.

7. Verfahren nach Anspruch 6, bei dem der Berechtigungsverwalter (CM) bei positiver Überprüfung der Bestätigung einen Authentisierungsstatus auf "True" setzt.

8. Verfahren nach einem der Ansprüche 3 bis 7, bei dem jeder der mindestens zwei Anwendungen (CA1, CA2) ein anwendungsspezifisches Pseudo-Authentisierungsobjekt zugeordnet ist.

9. Verfahren nach Anspruch 8, bei dem der Berechtigungsverwalter (CM) bei Eingabe einer Kennung in Reaktion auf eine über die Signalanzeige (20) wiedergegebene Anwendung (CA1, CA2) eine dieser Anwendung zugeordnete Pseudo-Kennung nach positiver Kennungsprüfung auf "True" setzt.

10. Verfahren nach einem der Ansprüche 3 bis 9, bei dem ein Authentisierungsstatus einer Anwendung (CA1, CA2) vor Durchführen eines Ausführungsbefehls bei dem Berechtigungsverwalter (CM) abgefragt wird.

11. Verfahren zum Betrieb einer Prozessorchipkarte (SC), die mindestens zwei Anwendungen (CA1, CA2) aufweist, wobei eine zur Ausführung vorgesehene Anwendung (CA1, CA2) über eine Signalanzeige (20) der Prozessorchipkarte (SC) angezeigt wird, mit den folgenden Schritten:
- Empfangen einer Anfrage zur Ausführung einer der mindestens zwei Anwendungen (CA1, CA2),
- Anzeigen der zur Ausführung vorgesehenen Anwendung (CA1, CA2) über die Signalanzeige (20),
- Empfangen einer Kennung,
- Überprüfen der Kennung durch einen Berechtigungsverwalter (CM) der Prozessorchipkarte (SC),
- bei positiver Überprüfung, Setzen eines Authentisierungsstatus durch den Berechtigungsverwalter (CM),
- Freigeben der bestätigten Anwendung zur Ausführung,
wobei nach Freigabe der zur Ausführung vorgesehenen Anwendung (CA1, CA2) die mindestens eine verbleibende nicht ausgewählte Anwendung nicht ausgeführt werden kann.

12. Verfahren nach Anspruch 11, das vor dem Schritt des Freigebens den folgenden weiteren Schritt umfasst:
- Abfrage des Authentisierungsstatus durch die zur Ausführung vorgesehene Anwendung (CA1, CA2) bei dem Berechtigungsverwalter (CM),
- Freigabe der Anwendung (CA1, CA2) bei positivem Authentisierungsstatus, andernfalls Ausführungsverweigerung.

13. Verfahren nach Anspruch 11 oder 12, bei dem der Authentisierungsstatus der Nutzerkennung gesetzt wird oder bei dem der Authentisierungsstatus einer durch die Nutzer-kennung referenzierten und einer Anwendung zugeordneten Pseudo-Kennung gesetzt wird.

14. Computerprogramm mit Programmcodemitteln, um alle Schritte eines Verfahrens nach einem der Ansprüche 3 bis 13 durchzuführen, wenn das Computerprogramm auf einer Prozessorchipkarte (SC) ausgeführt wird.

## Claims

1. Processor chip card (SC) having
- at least one microcontroller (MC, 10),
- at least two applications (CA1, CA2),
- at least one signal indicator (20) and
- an authorization manager (CM),
wherein the processor chip card (SC) is configured so as
- to use the at least one signal indicator (20) to indicate which of the at least two applications (CA1, CA2) is intended for execution, and,
- after a confirmation of the application (CA1, CA2) intended for execution has been received, to enable the application (CA1, CA2) for execution,
**characterized in that** after the application (CA1, CA2) intended for execution has been enabled the at least one remaining unselected application cannot be executed.

2. Processor chip card (SC) according to Claim 1, in which the confirmation comprises reading-in of an identifier, for example a user identifier and/or biometric identifier; and/or
the authorization manager (CM) of said processor chip card is formed on the at least one microcontroller (MC, 10); and/or
which comprises a secure microcontroller (MC) as first microcontroller and an intermediate chip (10), connected to the secure microcontroller (MC), as second microcontroller; and/or
in which each of the at least two applications (CA1, CA2) has an associated application-specific pseudo-authentication object.

3. Method for operating a processor chip card (SC) that has at least two applications (CA1, CA2), wherein a selection of one application (CA1, CA2) intended for execution from the at least two applications (CA1, CA2) is indicated by means of a signal indicator (20) of the processor chip card (SC) and, after a confirmation of the application (CA1, CA2) intended for execution has been received, the application (CA1, CA2) is enabled for execution, wherein after the application (CA1, CA2) intended for execution has been enabled the at least one remaining unselected application cannot be executed.

4. Method according to Claim 3, in which the confirmation comprises reading-in of an identifier, for example a user identifier and/or biometric identifier; and/or in which the confirmation comprises an authentication.

5. Method according to either of Claims 3 and 4, having the following steps:
- receiving a selection of one of the at least two applications (CA1, CA2),
- indicating the application (CA1, CA2) intended for execution by means of the signal indicator (20),
- receiving a confirmation from the user,
- enabling the confirmed application for execution,
- outputting the result of the executed application.

6. Method according to one of Claims 3 to 5, which comprises the step of checking the confirmation before the confirmed application is enabled for execution.

7. Method according to Claim 6, in which the authorization manager (CM) sets an authentication status to "True" if the check on the confirmation is positive.

8. Method according to one of Claims 3 to 7, in which each of the at least two applications (CA1, CA2) has an associated application-specific pseudo-authentication object.

9. Method according to Claim 8, in which the authorization manager (CM) responds to input of an identifier in reaction to an application (CA1, CA2) conveyed by means of the signal indicator (20) by setting a pseudo-identifier associated with this application to "True" after a positive identifier test.

10. Method according to one of Claims 3 to 9, in which an authentication status of an application (CA1, CA2) is checked by the authorization manager (CM) before an execution command is performed.

11. Method for operating a processor chip card (SC) that has at least two applications (CA1, CA2), wherein an application (CA1, CA2) intended for execution is indicated by means of a signal indicator (20) of the processor chip card (SC), having the following steps:
- receiving a query concerning the execution of one of the at least two applications (CA1, CA2),
- indicating the application (CA1, CA2) intended for execution by means of the signal indicator (20),
- receiving an identifier,
- checking the identifier by means of an authorization manager (CM) of the processor chip card (SC),
- if the check is positive, setting an authentication status by means of the authorization manager (CM),
- enabling the confirmed application for execution, wherein after the application (CA1, CA2) intended for execution has been enabled the at least one remaining unselected application cannot be executed.

12. Method according to Claim 11, which has the following further step before the enabling step:
- checking the authentication status with the authorization manager (CM) by means of the application (CA1, CA2) intended for execution,
- enabling the application (CA1, CA2) if the authentication status is positive, otherwise denying execution.

13. Method according to Claim 11 or 12, in which the authentication status of the user identifier is set or in which the authentication status of a pseudo-identifier referenced by the user identifier and associated with an application is set.

14. Computer program having program code means in order to perform all of the steps of a method according to one of Claims 3 to 13 when the computer program is executed on a processor chip card (SC).

## Revendications

1. Carte à puce de processeur (SC) comprenant
- au moins un microcontrôleur (MC, 10),
- au moins deux applications (CA1, CA2),
- au moins un affichage de signal (20) et
- un gestionnaire d'autorisation (CM),
dans laquelle la carte à puce de processeur (SC) est configurée pour
- afficher, au moyen dudit au moins un affichage de signal (20), laquelle desdites au moins deux applications (CA1, CA2) est destinée à être exécutée, et
- lancer l'exécution de l'application (CA1, CA2) après réception d'une confirmation de l'application (CA1, CA2) destinée à être exécutée,
**caractérisée en ce qu'**après le lancement de l'application (CA1, CA2) destinée à être exécutée, ladite au moins une application non sélectionnée restante ne peut pas être exécutée.

2. Carte à puce de processeur (SC) selon la revendication 1, dans laquelle la confirmation comprend une lecture d'un identifiant, par exemple d'un identifiant d'utilisateur et/ou d'un identifiant biométrique ; et/ou
dont le gestionnaire d'autorisation (CM) est mis en œuvre sur ledit au moins un microcontrôleur (MC, 10) ; et/ou qui comprend en tant que premier microcontrôleur un microcontrôleur sécurisé (MC) et en tant que second microcontrôleur une puce intermédiaire (10) connectée au microcontrôleur sécurisé (MC) ; et/ou
dans laquelle un objet de pseudo-authentification spécifique de l'application est associé à chacune desdites au moins deux applications (CA1, CA2).

3. Procédé de fonctionnement d'une carte à puce de processeur (SC) qui comporte au moins deux applications (CA1, CA2), dans lequel une sélection d'une application (CA1, CA2) destinée à être exécutée parmi lesdites au moins deux applications (CA1, CA2) est affichée par un affichage de signal (20) de la carte à puce de processeur (SC) et après réception d'une confirmation de l'application (CA1, CA2) destinée à être exécutée, l'exécution de l'application (CA1, CA2) est lancée, dans lequel, après le lancement de l'application (CA1, CA2) destinée à être exécutée, ladite au moins une application non sélectionnée restante ne peut pas être exécutée.

4. Procédé selon la revendication 3, dans lequel la confirmation comprend une lecture d'un identifiant, par exemple d'une identifiant d'utilisateur et/ou un d'un identifiant biométrique ; et/ou dans lequel la confirmation comprend une authentification.

5. Procédé selon l'une des revendications 3 ou 4, comprenant les étapes suivantes :
- réception d'une sélection de l'une desdites au moins deux applications (CA1, CA2),
- affichage de l'application (CA1, CA2) destinée à être exécutée par l'intermédiaire de l'affichage de signal (20),
- réception d'une confirmation de l'utilisateur,
- lancement de l'exécution de l'application confirmée,
- fourniture du résultat de l'application exécutée.

6. Procédé selon l'une des revendications 3 à 5, qui comprend, avant le lancement de l'exécution de l'application confirmée, l'étape de vérification de la confirmation.

7. Procédé selon la revendication 6, dans lequel, lors d'une confirmation positive, le gestionnaire d'autorisation (CM) règle un statut d'authentification à "True".

8. Procédé selon l'une des revendications 3 à 7, dans lequel un objet de pseudo-authentification spécifique de l'application est associé à chacune desdites au moins deux applications (CA1, CA2).

9. Procédé selon la revendication 8, dans lequel, lors de la saisie d'un identifiant en réponse à une application (CA1, CA2) reproduite par l'intermédiaire de l'affichage de signal (20), le gestionnaire d'autorisation (CM) règle un pseudo-identifiant associé à cette application à "True" après une vérification positive de l'identifiant.

10. Procédé selon l'une des revendications 3 à 9, dans lequel un statut d'authentification d'une application (CA1, CA2) est demandé au gestionnaire d'autorisation (CM) avant l'exécution d'une instruction d'exécution.

11. Procédé de fonctionnement d'une carte à puce de processeur (SC) qui comporte au moins deux applications (CA1, CA2), dans lequel une application (CA1, CA2) destinée à être exécutée est affichée par l'intermédiaire d'un affichage de signal (20) de la carte à puce de processeur (SC), comprenant les étapes suivantes :
- réception d'une demande d'exécution de l'une desdites au moins deux applications (CA1, CA2),
- affichage de l'application destinée à être exécutée (CA1, CA2) par l'affichage de signal (20),
- réception d'un identifiant,
- vérification de l'identification par un gestionnaire d'autorisation (CM) de la carte à puce de processeur (SC),
- lors d'une vérification positive, réglage d'un statut d'authentification par le gestionnaire d'autorisation (CM),
- lancement de l'exécution de l'application confirmée, dans lequel, après le lancement de l'application (CA1, CA2) destinée à être exécutée, ladite au moins une application non sélectionnée restante ne peut pas être exécutée.

12. Procédé selon la revendication 11, qui comprend, avant l'étape de lancement, l'étape supplémentaire suivante :
- demande du statut d'authentification par l'application (CA1, CA2) destinée à être exécutée au gestionnaire d'autorisation (CM),
- lancement de l'application (CA1, CA2) lorsque le statut d'authentification est positif, sinon refus d'exécution.

13. Procédé selon la revendication 11 ou 12, dans lequel le statut d'authentification de l'identifiant d'utilisateur est réglé ou dans lequel le statut d'authentification d'un pseudo-identifiant référencé par l'identifiant d'utilisateur et associé à une application est réglé.

14. Programme d'ordinateur comprenant des moyens à code de programme permettant d'exécuter toutes les étapes d'un procédé selon l'une des revendications 3 à 13 lorsque le programme d'ordinateur est exécuté sur une carte à puce de processeur (SC).
